# EUROPÄISCHE PATENTSCHRIFT

(11) **EP 1 146 322 B1**
(45) Veröffentlichungstag und Bekanntmachung des Hinweises auf die Patenterteilung: **31.05.2006**
(21) Anmeldenummer: 01200972.6
(22) Anmeldetag: 15.03.2001
(51) Int. Cl.: G01G 23/02

(54) **Waage mit dichtender Arretierung**
Weighing scale with sealing locking
Balance avec blocage étanche

(30) Priorität: 10.04.2000 DE 10017528
(43) Veröffentlichungstag der Anmeldung: 17.10.2001
(73) Patentinhaber: Mettler-Toledo GmbH, 8606 Greifensee (CH)
(72) Erfinder: Iseli, Marc, 8344 Bäretswil (CH)

(56) Entgegenhaltungen:
- EP-A- 0 572 181
- US-A- 4 589 507

## Beschreibung

Die Erfindung bezieht sich auf eine Waage mit den Oberbegriffsmerkmalen des Anspruchs 1. Bei solchen Waagen können zwei Probleme auftreten. Zum einen mag es erwünscht sein, die Waage bei Nichtgebrauch zu arretieren, nicht zuletzt um sie vor zufälligen Beanspruchungen zu schützen, die gegebenenfalls die Genauigkeit der Waage beeinträchtigen könnten.
Die Wägezellen der in US 4589507 A offenbarte Wägebrücke für schwere Lasten können bei Nichtgebrauch dadurch geschützt werden, dass deren Waagschalen von den zugeordneten Wägemodulen mittels eines aufweitbaren und verkleinerbaren elastischen Elements entkoppelbar beziehungsweise koppelbar sind. Es werden zwei Ausführungen offenbart. In der ersten Ausführung ist das elastische Element zwischen dem Gehäuseboden und dem Kraftaufnehmer angeordnet und hebt die gesamte Wägezelle an bis das Übertragungsglied mit der Waagschale gekoppelt ist. In der zweiten Ausführung ist das elastische Element zwischen der Wagschale und dem Kraftaufnehmer angeordnet und dient als Übertragungsglied sobald es aufgeweitet ist.

Des Weiteren ist es eine bekannte Tatsache, dass Waagen oft in unsauberer Umgebung benutzt werden und insbesondere das zu wiegende Gut selbst eine Waage verschmutzen und damit in ihrer Genauigkeit verschlechtern kann. In manchen Anwendungen muss der Vorgang des Arretierens und wieder Freigebens in rascher Folge wiederholt erfolgen können.

Deshalb ist es Aufgabe der vorliegenden Erfindung, eine Waage der eingangs genannten Art mit rasch verstellbaren Arretier- und Dichtungsmitteln so auszubilden, dass ihre Genauigkeit nicht durch die genannten Umstände beeinflusst wird.

Dies gelingt erfindungsgemäss durch die kennzeichnenden Merkmale des Anspruchs 1. Dabei sind zwei prinzipiell gleichwertige Ausführungen denkbar. Die elastische Einrichtung kann in ihrer Ruhelage den beweglichen Teil der Krafteinleitung arretieren und durch eine Aktivierung willkürlich verkleinert werden, wodurch der bewegliche Teil freigeben wird. Umgekehrt kann die elastische Einrichtung in ihrer Ruhelage die Waage freigeben und unter willkürlicher Aktivierung ausgeweitet werden, was zur Arretierung des beweglichen Teils führt. In beiden Fällen bewirkt eine willkürliche Verkleinerung der elastischen Einrichtung die Freigabe des beweglichen Teils gegenüber dem ortsfesten Teil, beziehungsweise die willkürliche Aufweitung der elastischen Einrichtung eine Blockierung des beweglichen Teils gegenüber dem ortsfesten Teil. Die Arretierung bewirkt in beiden Fällen auch gleichzeitig eine gewisse Abdichtung zwischen dem mit dem Waagengehäuse verbundenen ortsfesten und dem beweglichen Teil der Waage.

Mit einer solchen Lösung wird also zweierlei erreicht: Einerseits kann durch Aufweiten bzw. Verkleinern der elastischen Einrichtung, die eine Feder sein kann, eine formschlüssige (z.B. durch Aufweiten der elastischen Einrichtung in eine entsprechende, den Formschluss ergebende Vertiefung) oder reibungsschlüssige Arretierung zwischen dem ortsfesten Teil und dem relativ dazu beweglichen Teil erreicht werden. Anderseits kann eine solche Aufweitung auch eine Abdichtung hervorrufen.

Letzteres wird insbesondere dann der Fall sein, wenn die elastische Einrichtung einen Hohlraum bildet und das Aufweiten oder Verkleinern durch Zu- oder Abfuhr eines Fluids erfolgt. Zweckmässigerweise wird hierzu eine wahlweise betätigbare Zu-und Abfuhreinrichtung für ein Fluid zu diesem Hohlraum vorgesehen. Denn auf diese Weise ist auch eine einfache Betätigung gesichert. Die Abdichtungswirkung wird sich besonders effizient dann ergeben, wenn die elastische Einrichtung zwischen dem Übertragungsglied und dem Waagengehäuse beim Durchgang des ersteren durch das letztere angeordnet ist. Auf diese Weise wird nämlich die Abdichtung gerade dort erfolgen, wo sich der, notwendigerweise offene, Eingang zum Waagengehäuse befindet. Sicher wäre es denkbar, die Abdichtung erst weiter innen zu schaffen und dafür beispielsweise eine Auffangkammer für allfällige Verschmutzungen vorzusehen, doch ist die Ausbildung an der Peripherie des Waagengehäuses vorteilhafter.

Obwohl es im Rahmen der Erfindung möglich wäre, die elastische Einrichtung am beweglichen Teil anzuordnen und gegen den ortsfesten Teil hin aufzuweiten, so ist es doch bevorzugt, wenn die elastische Einrichtung, vorzugsweise samt Zu- und Abfuhreinrichtung für das Fluid, mit dem ortsfesten Teil verbunden ist und gegen den beweglichen Teil hin, zur Anlage an diesem aufweitbar ist.

Im Rahmen der Erfindung ist es durchaus denkbar, z.B. für Arretierungszwecke, die elastische Einrichtung als einzelne, beispielsweise mechanisch durch Druck, aufweitbare Polster vorzusehen. Es ist jedoch bevorzugt, wenn die elastische Einrichtung als Ringwulst zwischen ortsfestem und beweglichem Teil ausgebildet ist, der sich mit vorbestimmtem Durchmesser zylindrisch um eine im Zentrum des beweglichen Teils in der Bewegungsrichtung liegende Achse erstreckt und im unaufgeweiteten Zustand einen vorbestimmten Radius besitzt. Dabei kann der ortsfeste Teil einen in das Innere des Ringwulstes ragenden Stützkörper aufweisen, der vorzugsweise mit wenigstens einem Zu- bzw. Ablasskanal für das Fluid verbunden ist.

Um einen möglichst flächigen Druck zwischen den beiden relativ zueinander beweglichen Teilen auszuüben, ist es vorteilhaft, wenn der Stützkörper eine gegen den beweglichen Teil hin gerichtete Stützfläche mit einem Radius besitzt, der wenigstens annähernd dem des Ringwulstes entspricht. Dies ist deswegen von Vorteil, weil bei einem relativ flachen Bogen die Gefahr bestehen könnte, dass sich der Wulst einwärts verformt. Solch ein flacher Bogen wird aber insbesondere dann entstehen, wenn der Radius des Ringwulstes wenigstens annähernd dem Durchmesser entspricht. Dies gibt nämlich eine besonders wirksame Druckfläche an Stelle etwa einer blossen Linienberührung.

Um bei fluidischer (hydraulisch oder, wie bevorzugt, pneumatischer) Aufweitung eine gleichmässige Verteilung des Fluiddruckes zu sichern, ist es bevorzugt, wenn der Stützkörper einen dem Ringwulst zugekehrt offenen, umlaufenden Ringkanal aufweist.

Bei Anlage der elastischen Einrichtung zwischen dem ortsfesten und dem durch die Last gegenüber dem Waagengehäuse beweglichen Teil besteht die Gefahr einer unsymmetrischen Krafteinwirkung auf den beweglichen Teil, was zu einer Beeinträchtigung oder in Extremfällen gar zur Beschädigung der Wägezelle führen könnte. Mit Vorteil wird daher eine konstruktive Massnahme vorgesehen, welche ein horizontales Spiel zulässt.

Weitere Einzelheiten der Erfindung ergeben sich an Hand der nachfolgenden Beschreibung eines in der Zeichnung schematisch dargestellten bevorzugten Ausführungsbeispieles sowie einer Variante dazu. Von diesem zeigen die
- Fig. 1: einen Schnitt durch das Waagengehäuse einer erfindungsgemässen Waage, zu der die
- Fig. 2: eine Vergrösserung der Einzelheit II der Fig. 1 veranschaulicht, und die
- Fig. 3: eine Variante der Einzelheit II.

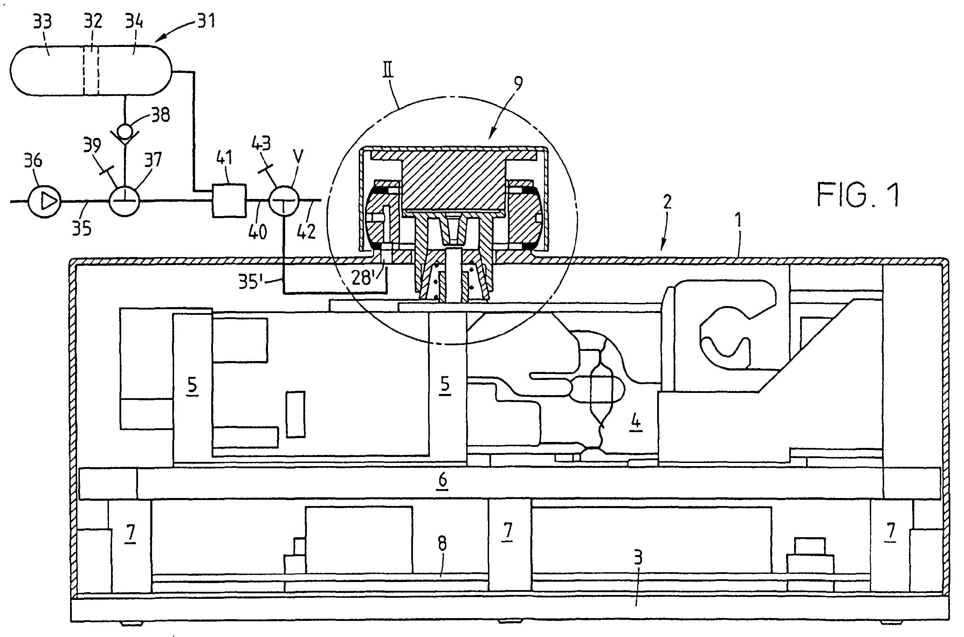

Die Fig. 1 zeigt schematisch eine Waage 2, zum Beispiel eine Bandwaage unterhalb eines Wiegeabschnittes eines Transportbandes. Das Waagengehäuse 1 sitzt auf einem Sockel 3. Innerhalb des Waagengehäuses 1 ist ein an sich bekannter Kraftaufnehmer 4, bevorzugt mit einem die Hebelübersetzung beinhaltenden Block, der mittels Bügeln 5 auf einer Platte 6 befestigt ist. Die Platte 6 ihrerseits wird an ihrer Unterseite von Stützen 7 gehalten. Im darunter befindlichen Hohlraum ist die Wägeelektronik, z.B. auf einer Leiterplatte 8, untergebracht.

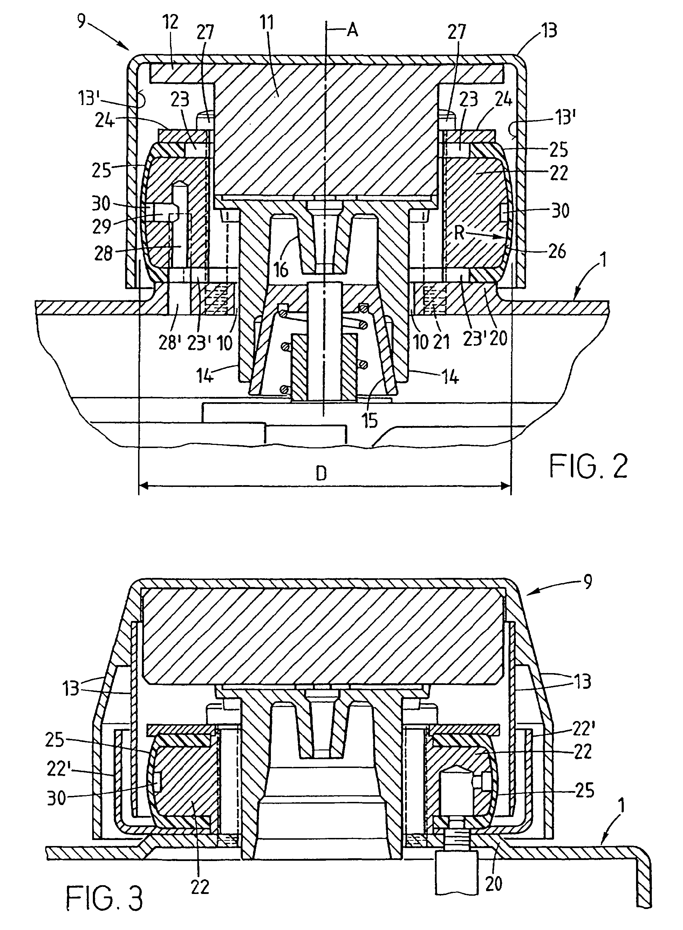

Über das Waagengehäuse 1 erhebt sich ein druckknopfartiges Übertragungsglied 9, das in Fig. 2 vergrössert dargestellt ist. Dieses Übertragungsglied 9 erstreckt sich entlang einer Achse A und durchsetzt eine koaxiale Öffnung 10 des Waagengehäuses 1, um die aufgenommene Druckkraft auf den Kraftaufnehmer 4 zu übertragen. Somit ist besonders aus Fig. 2 ersichtlich, dass sich das Übertragungsglied 9 innerhalb der Öffnung 10 relativ zu den Wandungen des Gehäuses 1 axial bewegen kann.

Das Übertragungsglied 9 besteht aus einem Knopf 11 mit verbreitertem Kopf 12, auf den eine etwa topfförmige Abdeckkappe 13 aufgesetzt ist. Nach unten zu besitzt das Übertragungsglied 9 Kopplungsbeine 14 oder einen entsprechenden Konus, der auf einen Gegenkonus 15 aufgesetzt und mit ihm, von ihm abnehmbar, gekoppelt ist. Die Beine 14 sind Vorsprünge von einem Nabenteil 16, der an der Unterseite des Knopfes 11 befestigt, beispielsweise geklebt, ist. Knopf 11, Kopf 12 und Nabenteil 16, allenfalls samt Kopplungsbereich 14, können aber auch aus einem Stück gefertigt sein. Durch die Kopplungsbeine 14 wird die vom Übertragungsglied 9 aufgenommene Kraft in der für Waagen üblichen Art über den Gegenkonus 15 auf den Kraftaufnehmer 4 übertragen.

Will man nun die dargestellte Waage arretieren, etwa weil ein darüber laufendes Band in Bewegung ist und somit Kräfte auf das Übertragungsglied wirken, so muss verhindert werden, dass sich die entsprechenden Hebel des Kraftaufnehmers 4 zu bewegen vermögen. Natürlich könnte die Arretierung auch an diesem Hebelsystem selbst vorgenommen werden, wie ja auch eine allfällige Dämpfung im allgemeinen an diesem erfolgt. Bevorzugt ist jedoch die dargestellte Konstruktion, bei der die Lager des Hebelsystems nicht belastet werden. Das Waagengehäuse 1 weist rund um die Öffnung 10 nach oben zu einen Flansch 20 mit Gewindelöchern 21 auf. Darauf aufgesetzt und mit in den Gewindelöchern 21 festgezogenen Schrauben 27 befestigt ist ein Ringteil 22.

Dieser Ringteil 22 besitzt nach unten zu einen vorbestimmten Abstand sichernde, z.B. rippenartige, untere Vorsprünge 23' und ebenso an der Oberseite obere Vorsprünge 23. Zwischen diesen Vorsprüngen 23', 23 einerseits und dem jeweils gegenüberliegenden Teil, nämlich an der Unterseite dem Flansch 20 und an der Oberseite einer von den Schrauben 27 durchsetzten Druckplatte 24 ist eine sich etwa wulstförmig ringsum erstreckende Dichtungsmembrane 25 nach Art der aufblasbaren Dichtungen festgeklemmt.

Diese Dichtungsmembrane 25 ist nach aussen mit einem Radius R gewölbt. Der Ringteil 22 besitzt dazu an der Innenseite der Membrane 25 vorzugsweise eine sich wenigstens annähernd parallel erstreckende Stützfläche 26. Damit bildet der Ringteil 22 eine Abstützung für die Dichtungsmembrane 25. Der Durchmesser der Membrane 25 rund um die Achse A ist in Fig. 2 mit D bezeichnet.

Der Ringteil 22 bzw. Stützkörper weist in seinem Inneren mindestens eine Längsbohrung 28 und zumindest eine Querbohrung 29 auf. Die Querbohrung 29 ist zweckmässig direkt auf die axiale Mitte der Membrane 25 nach aussen gerichtet. Vorteilhaft mündet die Querbohrung 29 in einen in der Stützfläche 26 eingefrästen und um den Stützkörper 22 umlaufenden Ringkanal 30, so dass über die Bohrungen 28, 29 zugeführtes Fluid rundum gleichmässig verteilt werden kann.

Die teilweise mit einem Gewinde versehene Längsbohrung 28 des Stützkörpers 22 ist im Flansch 20 als Bohrung 28' fortgesetzt, die ihrerseits als Gewindeloch ausgestaltet sein kann. Über eines dieser Gewinde kann etwa eine Anschlussleitung 35' (Fig. 1) mit der Bohrung 28 verbunden werden. Dabei ist es klar, dass die zwischen dem Flansch 20 und den Vorsprüngen 23' dicht festgeklemmte Membrane 25 an der Linie der Bohrungen 28, 28' eine entsprechende Öffnung besitzt.

Die im folgenden beschriebene, in der Figur 1 schematisch ausserhalb des Waagengehäuses gezeichnete Zu- und Abfuhreinrichtung, ist eine von vielen möglichen Varianten und kann auch teilweise oder gänzlich im Innern des Waagengehäuses 1 angeordnet sein. Sie ermöglicht die Zufuhr von Fluid, bevorzugt von Luft, auf zwei Arten, die jede für sich oder in der gezeigten Kombination verwendet werden können. Ein Druckakkumulator 31, der beispielsweise auf die bekannte Art durch einen darin verschiebbaren Kolben 32 in zwei Kammern 33 und 34 unterteilt ist, dient als Quelle für das Fluid. Die linke Kammer 33 ist dicht und enthält beispielsweise eine Gasfüllung, die auf in die Kammer 34 eingepumpte Luft einen gewissen, innerhalb vorbestimmter Grenzen konstanten Druck ausüben wird. Für die Zufuhr von Luft ist eine Zufuhrleitung 35 vorgesehen, die mit einer Pumpe 36 oder einem entsprechenden Blasbalg verbunden ist. Die Verwendung eines Akkumulators 31 ist deshalb vorteilhaft, weil er selbst bei langer Nichtbenützung der Waage durch sein Gaspolster in der Kammer 33 stets eventuelle Leckverluste über die Membrane 25 automatisch ausgleicht.

Wie in Fig. 1 dargestellt ist, passiert die Zufuhrleitung 35 ein Umschaltventil 37 und führt von diesem, vorteilhaft über ein Rückschlagventil 38 in die Kammer 34. Das Rückschlagventil 38 kann an sich an beliebiger Stelle innerhalb der Leitung 35 vorgesehen sein. Sein Zweck ist ja letztlich, ein Rückströmen von Druckluft zur Pumpe 36 bzw. ins Freie zu verhindern. Dieser Zweck mag auch dann erwünscht sein, wenn die Pumpe 36 nicht gegen den Akkumulatordruck zu arbeiten hat, sondern, wie unten erläutert wird, die Membrane 25 direkt aufweitet. Allerdings sind in den meisten Fällen solche Pumpen 36 selbst bereits mit einem Rückschlagventil versehen, so dass ein gesondertes Ventil dieser Art gegebenenfalls überhaupt entfallen kann. Anderseits wäre es ebenso möglich, je ein Rückschlagventil in die beiden vom Umschaltventil 37 abgehenden Leitungen einzusetzen.

Alternativ kann nun also das Umschaltventil 37 mittels einer Handhabe 39 so eingestellt werden, dass die von der Pumpe 36 bereitgestellte Druckluft über eine Leitung 40 unmittelbar dem von den Bohrungen 28, 29 und vom Ringkanal 30 gebildeten Kanalsystem zugeführt wird. Während aber ein Akkumulator 31 verhältnismässig gleichmässig grossen Druck in die Membrane 25 einzubringen und auch aufrechtzuerhalten vermag, kann bei direktem Anschluss der Pumpe 36 an das Kanalsystem 28-30 die Gefahr eines zu hohen Druckes gegeben sein. Deshalb mag es zweckmässig sein, in der Leitung 40 (oder an einer beliebigen Stelle zwischen der Leitung 40 und der Membrane 25) ein Druckbegrenzungsventil 41 vorzusehen, das entweder die weitere Zufuhr von Druckmedium ab einem vorbestimmten und gegebenenfalls einstellbaren Maximalwert sperrt oder die überschüssige Menge freigibt.

Durch das so zugeführte, bevorzugt pneumatische, Fluid wird die Membrane 25 radial aufgeweitet und legt sich damit unter Druck gegen die Innenfläche 13' der topfförmigen Abdeckkappe 13. Wäre die Membrane 25 von einem blossen toroidartigen Schlauch gebildet, was im Rahmen der Erfindung ebenfalls möglich ist, so ergäbe sich eine beinahe lediglich linienförmige Anlage an dieser Innenfläche 13' entlang einer Ringlinie entlang des Innenumfanges der topfförmigen Abdeckkappe 13. Dadurch aber, dass die Membrane 25 in der ersichtlichen Weise als relativ breiter Ringwulst - und insbesondere mit einem Radius R ausgebildet ist, der wenigstens annähernd dem Durchmesser D entspricht - führt dies zu einer flächigen und damit sehr dichten Anlage der Membrane 25 an die Innenfläche 13', wobei zwei Effekte erhalten werden. Zum einen wird das Übertragungsglied 9 durch die reibende Anlage der Membrane unter entsprechendem Druck an einer weiteren Bewegung gehindert. Dies entspricht einer Arretierung der Waage, wie sie bei Nichtgebrauch erwünscht ist. Zum andern aber wird durch die dichte Anlage das Eindringen von Staub oder anderen Verschmutzungen über die Öffnung 10 in das Innere des Waagengehäuses 1 verhindert. Dazu trägt bei, dass die topfförmige Abdeckkappe 13 schon an sich eine weitgehende Abdeckung bewirkt, bei der (auch während des Wägebetriebes) etwaige Verschmutzungen nur über den Raum zwischen der Membrane 25 und der Fläche 13' nach oben und von dort wieder über das Innere des ringförmigen Stützkörpers 22 abwärts in die Öffnung gelangen könnten. Damit wird also durch die topfförmige Abdeckkappe 13 auch während des Betriebes eine Art Labyrinthdichtung gebildet. Somit hat die Membrane 25 in einer glücklichen Kombination die zwei Wirkungen einer Arretierung und einer wirksamen Abdichtung gegen Verschmutzung des Inneren des Waagengehäuses 1. Um zu verhindern, dass durch das Anliegen der Membrane 25 über das Übertragungsglied 9 radiale Kräfte auf den Kraftaufnehmer 4 wirken, ist der Innendurchmesser der topfförmigen Abdeckkappe 13 etwas grösser bemessen als der Durchmesser des verbreiterten Kopfs 12, weist also radiales Spiel auf.

Die Figur 3 zeigt eine Variante der Einzelheit II der Waage 2 mit einer weiter ausgebauten Labyrinthdichtung. Der Flansch 20 ist hier ersetzt durch eine Ausbuchtung im Waagengehäuse 1 an der Stelle des Übertragungsglieds 9. Der Ringteil 22 ist um einen sich von dessen Unterseite erstreckenden, nach oben offenen, von ihm beabstandeten Topf 22' ergänzt. Die topfförmige Abdeckkappe 13 weist zwei konzentrisch verlaufende Wände auf. Die Wand des Topfs 22' verläuft dazwischen. Die aus den drei Wänden gebildete Labyrinthdichtung bietet einen sehr guten Schutz gegen das Eindringen von verschmutzenden Partikeln.

Will man eine durch ein aufgeweitetes elastisches Element arretierte Waage wieder in Betrieb nehmen, so ist es zunächst einmal erforderlich, die Aufweitung des elastischen Elements, also der Membrane 25 wieder rückgängig zu machen. Zu diesem Zweck könnte an sich eine Einrichtung vorgesehen werden, durch welche etwa der Druck der Druckplatte 24 für kurze Zeit aufgehoben wird, um ein Entweichen der Luft aus der Membrane 25 zu ermöglichen. Günstiger aber ist es, wenn ein schaltbares Ventil (V) vorgesehen wird, das ein Ablassen der Luft beispielsweise über eine nach aussen führende Entlüftungsleitung 42 ermöglicht. Eine solche Entlüftungsleitung 42 mag natürlich in beliebiger Weise angeordnet werden und ist hier lediglich schematisch angedeutet. Beispielsweise kann die Anordnung so erfolgen, dass damit gleichzeitig etwaige sich nahe dem Übertragungsglied 9 ansammelnde Verschmutzungen weggeblasen werden.

Das Auslösen des Schaltventiles V kann über eine Betätigungseinrichtung 43 erfolgen, zum Beispiel, wie in der Figur 1 angedeutet, über eine Handhabe, oder über einen mit der Steuerung des über die Waage 2 laufenden Bands und seines Antriebs synchronisierten, Schalter, der an die Stelle der Handhabe tritt. Damit kann gleichzeitig mit der Inbetriebnahme der Waage automatisch die Arretierung gelöst werden, was Fehlfunktionen vermeidet.

Im Rahmen der Erfindung sind zahlreiche Modifikationen möglich. Insbesondere kann die elastische Einrichtung so ausgestaltet werden, dass sie die Waage ständig blockiert, ausser wenn sie für eine Wägung aktiviert wird und somit die Blockierung freigibt. Dies lässt sich beispielsweise dadurch erreichen, dass die elastische Einrichtung im Ruhezustand am feststehenden und am beweglichen Teil anliegt und vor einem Wägevorgang verkleinert wird, so dass die kraftschlüssige Verbindung von beweglichem und feststehendem Teil aufgegeben wird. Konkret kann zum Beispiel die elastische Einrichtung aus einem ringförmigen Schlauch bestehen, der evakuiert werden kann und dabei zusammenfällt.

## Patentansprüche

1. Waage mit einem Waagengehäuse (1), in dem sich ein Kraftaufnehmer (4) befindet, sowie mit einem aus dem Waagengehäuse (1) herausgeführten Übertragungsglied (9) zur Übertragung einer zu wiegenden Last auf den Kraftaufnehmer (4), wobei zwischen einem mit dem Waagengehäuse (1) verbundenen ortsfesten Teil (20, 22) und einem durch die Last gegenüber dem Waagengehäuse (1) beweglichen Teil (13) eine elastische, willkürlich aufweitbare und verkleinerbare Einrichtung (25) angeordnet ist, **dadurch gekennzeichnet, dass** die elastische Einrichtung (25) zur Anlage zwischen den beiden Teilen (13; 20, 22) angeordnet ist und durch eine willkürliche Verkleinerung den beweglichen Teil (13) gegenüber dem ortsfesten Teil (20, 22) freigibt, beziehungsweise durch eine willkürliche Aufweitung den beweglichen Teil (13) gegenüber dem ortsfesten Teil (20, 22) arretiert.

2. Waage nach Anspruch 1, **dadurch gekennzeichnet, dass** die elastische Einrichtung (25) in einer Ruhelage die beiden Teile (13; 20, 22) verbindet und durch eine willkürliche Verkleinerung den beweglichen Teil freigibt.

3. Waage nach Anspruch 1, **dadurch gekennzeichnet, dass** die elastische Einrichtung (25) in einer Ruhelage die beiden Teile (13; 20, 22) nicht verbindet und durch eine willkürliche Aufweitung den beweglichen Teil blockiert.

4. Waage nach Anspruch 3, **dadurch gekennzeichnet, dass** die elastische Einrichtung (25) mit dem ortsfesten Teil (20, 22) verbunden ist und gegen den beweglichen Teil (13) hin, zur Anlage an diesem aufweitbar ist.

5. Waage nach Anspruch 1, **dadurch gekennzeichnet, dass** das mit dem Waagengehäuse (1) verbundene ortsfeste Teil (20, 22) über das Waagengehäuse vorsteht und das durch die Last gegenüber dem Waagengehäuse (1) bewegliche Teil (13) Teil des herausgeführten Übertragungsglieds (9) ist.

6. Waage nach Anspruch 5, **dadurch gekennzeichnet, dass** das Übertragungsglied (9) eine den ortsfesten Teil (20, 22) überragende, etwa topfförmige Kappe (13) aufweist und die elastische Einrichtung (25) sich zwischen dem ortsfesten Teil (20, 22) und einer Innenfläche (13') dieser Kappe (13) aufweitet.

7. Waage nach Anspruch 1, **dadurch gekennzeichnet, dass** die elastische Einrichtung (25) als Ringwulst (25) zwischen ortsfestem (20, 22) und beweglichem Teil (13) ausgebildet ist, der sich mit vorbestimmtem Durchmesser (D) um eine im Zentrum des beweglichen Teils (13) liegende Achse (A) erstreckt und in einer Ruhelage einen vorbestimmten Radius (R) besitzt.

8. Waage nach Anspruch 7, **dadurch gekennzeichnet, dass** der Radius (R) des Ringwulstes (25) wenigstens annähernd dem Durchmesser (D) entspricht.

9. Waage nach Anspruch 1, **dadurch gekennzeichnet, dass** die elastische Einrichtung (25) einen Hohlraum bildet und das Aufweiten oder Verkleinern durch Zu- oder Abfuhr eines Fluides in diesen Hohlraum erfolgt, und dass hierzu eine wahlweise betätigbare Zu- und Abfuhreinrichtung (31-43) für ein Fluid zu diesem Hohlraum vorgesehen ist.

10. Waage nach Anspruch 9, **dadurch gekennzeichnet, dass** die Zu-und Abfuhreinrichtung (31-41) eine Handpumpe (36) aufweist.

11. Waage nach Anspruch 9 oder 10, **dadurch gekennzeichnet, dass** die Zu- und Abfuhreinrichtung (31-43) einen Akkumulator (31) aufweist.

12. Waage nach einem der Ansprüche 9 bis 11, **dadurch gekennzeichnet, dass** das Fluid Luft ist.

13. Waage nach einem der Ansprüche 9 bis 12, **dadurch gekennzeichnet, dass** die Zufuhreinrichtung (31-41) eine Druckbegrenzungseinrichtung, insbesondere ein Druckbegrenzungsventil (41), aufweist.

14. Waage nach einem der Ansprüche 9 bis 13, **dadurch gekennzeichnet, dass** die Zu- und Abfuhreinrichtung (31-43) ein über eine Betätigungseinrichtung (43) betätigbares Schaltventil (V) aufweist.

15. Waage nach einem der Ansprüche 9 bis 14, **dadurch gekennzeichnet, dass** die Zu- und Abfuhreinrichtung (31-41) mindestens eine Zufuhrleitung (35) mit einem Rückschlagventil (38) aufweist.

16. Waage nach den Ansprüchen 7 und 9, **dadurch gekennzeichnet, dass** der ortsfeste Teil (20, 22) einen in das Innere des Ringwulstes (25) ragenden Stützkörper (22) aufweist, der vorzugsweise mit wenigstens einem Zu- bzw. Abfuhrkanal (28-30) für das Fluid verbunden ist.

17. Waage nach Anspruch 16, **dadurch gekennzeichnet, dass** der Stützkörper (22) eine gegen den beweglichen Teil (13) hin gerichtete Stützfläche (26) mit einem Radius besitzt, der wenigstens annähernd dem Radius (R) des Ringwulstes (25) entspricht.

18. Waage nach Anspruch 16 oder 17, **dadurch gekennzeichnet, dass** der Stützkörper (22) einen dem Ringwulst (25) zugekehrt offenen, umlaufenden Ringkanal (30) aufweist.

## Claims

1. A balance with a balance housing (1), in which a force transducer (4) is situated, and with a transmitting element (9) that extends out of the balance housing (1) in order to transmit a load to be weighed to the force transducer (4), wherein an elastic device (25) that can be arbitrarily expanded and contracted is arranged between a stationary part (20, 22) connected to the balance housing (1) and a part (13) that can be moved relative to the balance housing (1) by a load, **characterized in that** the elastic device (25) is arranged between to join both parts (13; 20, 22) and releases the movable part (13) relative to the stationary part (20, 22) by means of an arbitrary contraction and locks the movable part (13) relative to the stationary part (20, 22) by means of an arbitrary expansion.

2. The balance according to Claim 1, **characterized in that** the elastic device (25) connects the two parts (13; 20, 22) in an idle position and releases the movable part by means of an arbitrary contraction.

3. The balance according to Claim 1, **characterized in that** the elastic device (25) does not connect the two parts (13; 20, 22) in an idle position and locks the movable part by means of an arbitrary expansion.

4. The balance according to Claim 3, **characterized in that** the elastic device (25) is connected to the stationary part (20, 22) and can be expanded toward the movable part (13) until it joins the latter.

5. The balance according to Claim 1, **characterized in that** the stationary part (20, 22) connected to the balance housing (1) protrudes beyond the balance housing, and that the part (13) that can be moved relative to the balance housing (1) by a load, forms a part of the transmitting element (9) extending out of the housing.

6. The balance according to Claim 5, **characterized in that** the transmitting element (9) comprises an approximately pot-shaped cap (13) that protrudes beyond the stationary part (20, 22), and **in that** the elastic device (25) expands between the stationary part (20, 22) and an inner surface (13') of this cap (13).

7. The balance according to Claim 1, **characterized in that** the elastic device (25) is realized in the form of an annular bead (25) between the stationary (20, 22) and the movable part (13) which extends around an axis (A) lying in the center of the movable part (13) with a predetermined diameter (D) and has a predetermined radius (R) in an idle position.

8. The balance according to Claim 7, **characterized in that** the radius (R) of the annular bead (25) at least approximately corresponds to the diameter (D).

9. The balance according to Claim 1, **characterized in that** the elastic device (25) forms a hollow space and the expansion or contraction is realized by introducing or discharging a fluid into/from this hollow space, and **in that** a supply and discharge device (31-43) for a fluid is provided that leads to this hollow space and can be selectively actuated.

10. The balance according to Claim 9, **characterized in that** the supply and discharge device (31-41) comprises a hand pump (6).

11. The balance according to Claim 9 or 10, **characterized in that** the supply and discharge device (31-43) comprises an accumulator (31).

12. The balance according to one of Claims 9-11, **characterized in that** the fluid consists of air.

13. The balance according to one of Claims 9-12, **characterized in that** the supply device (31-41) contains a pressure limiting device, particularly a pressure control valve (41).

14. The balance according to one of Claims 9-13, **characterized in that** the supply and discharge device (31-43) contains a pilot valve (V) that can be actuated by an actuating device (43).

15. The balance according to one of Claims 9-14, **characterized in that** the supply and discharge device (31-41) contains at least one supply line (35) with a check valve (38).

16. The balance according to Claims 7 and 9, **characterized in that** the stationary part (20, 22) has a support member (22) that protrudes into the interior of the annular bead (25) and is preferably connected to at least one supply and/or discharge channel (28-30) for the fluid.

17. The balance according to Claim 16, **characterized in that** the support member (22) has a support surface (26) that is directed toward the movable part (13) and has a radius that at least approximately corresponds to the radius (R) of the annular bead (25).

18. The balance according to Claim 16 or 17, **characterized in that** the support member (22) has an open, circumferential ring channel (32) that faces the annular bead (25).

## Revendications

1. Balance comprenant un boîtier de balance (1), dans lequel se trouve un capteur de force (4), et un élément de transmission (9) sorti du boîtier de balance (1) pour la transmission d'une charge à peser au capteur de force (4), un dispositif (25) élastique, pouvant être élargi et rétréci volontairement étant disposé entre une partie (20, 22) fixe, reliée au boîtier de balance (1) et une partie (13) mobile par rapport au boîtier de balance (1) du fait de la charge, **caractérisée en ce que** le dispositif élastique (25) est disposé pour s'appuyer entre les deux parties (13 ; 20, 22) et libère par un rétrécissement volontaire la partie (13) mobile par rapport à la partie (20, 22) fixe, ou bloque la partie mobile (13) par rapport à la partie (20, 22) fixe par un élargissement volontaire.

2. Balance selon la revendication 1, **caractérisée en ce que** le dispositif (25) élastique relie dans une position de repos les deux parties (13 ; 20, 22) et libère la partie mobile par un rétrécissement volontaire.

3. Balance selon la revendication 1, **caractérisée en ce que** le dispositif (25) élastique ne relie pas les deux parties (13 ; 20, 22) dans une position de repos et bloque la partie mobile par un élargissement volontaire.

4. Balance selon la revendication 3, **caractérisée en ce que** le dispositif élastique (25) est relié à la partie (20, 22) fixe et peut être élargi en direction de la partie (13) mobile pour s'appuyer sur celle-ci.

5. Balance selon la revendication 1, **caractérisée en ce que** la partie (20, 22) fixe et reliée au boîtier de balance (1) dépasse du boîtier de balance et la partie (13) mobile par rapport au boîtier de balance (1) du fait de la charge fait partie de l'élément de transmission (9) guidé à la sortie de celle-ci.

6. Balance selon la revendication 5, **caractérisée en ce que** l'élément de transmission (9) présente un capuchon (13) dépassant de la partie (20, 22) fixe et à peu près en forme de pot et le dispositif (25) élastique s'élargit entre la partie (20, 22) fixe et une face intérieure (13') de ce capuchon (13).

7. Balance selon la revendication 1, **caractérisée en ce que** le dispositif élastique (25) est conçu comme un renflement annulaire (25) entre la partie fixe (20, 22) et la partie mobile (13), qui s'étend avec un diamètre (D) prédéfini autour d'un axe (A) disposé au centre de la partie (13) mobile et présente un rayon (R) prédéfini dans une position de repos.

8. Balance selon la revendication 7, **caractérisée en ce que** le rayon (R) du renflement annulaire (25) correspond au moins approximativement au diamètre (D).

9. Balance selon la revendication 1, **caractérisée en ce que** le dispositif (25) élastique forme une cavité et l'élargissement ou le rétrécissement s'effectue par l'arrivée ou l'évacuation d'un fluide dans cette cavité, et **en ce que** un dispositif d'arrivée et d'évacuation (31-43) pouvant être actionné au choix est prévu à cet effet pour un fluide pour cette cavité.

10. Balance selon la revendication 9, **caractérisée en ce que** le dispositif d'arrivée et d'évacuation (31-41) présente une pompe manuelle (36).

11. Balance selon la revendication 9 ou 10, **caractérisée en ce que** le dispositif d'arrivée et d'évacuation (31-43) présente un accumulateur (31).

12. Balance selon l'une quelconque des revendications 9 à 11, **caractérisée en ce que** le fluide est de l'air.

13. Balance selon l'une quelconque des revendications 9 à 12, **caractérisée en ce que** le dispositif d'arrivée (31-41) présente un dispositif de limitation de pression, en particulier une vanne de limitation de pression (41).

14. Balance selon l'une quelconque des revendications 9 à 13, **caractérisée en ce que** le dispositif d'arrivée et d'évacuation (31-43) présente une vanne de commutation (V) pouvant être actionnée par un dispositif d'actionnement (43).

15. Balance selon l'une quelconque des revendications 9 à 14, **caractérisée en ce que** le dispositif d'arrivée et d'évacuation (31-41) présente au moins une conduite d'arrivée (35) avec une vanne antiretour (38).

16. Balance selon la revendication 7 et 9, **caractérisée en ce que** la partie (20, 22) fixe présente un corps de soutien (22) dépassant à l'intérieur du renflement annulaire (25), qui est relié de préférence à au moins un canal d'arrivée et/ou d'évacuation (28-30) pour le fluide.

17. Balance selon la revendication 16, **caractérisée en ce que** le corps de soutien (22) présente une surface de soutien (26) orientée en direction de la partie (13) mobile avec un rayon qui correspond au moins approximativement au rayon (R) du renflement annulaire (25).

18. Balance selon la revendication 16 ou 17, **caractérisée en ce que** le corps de soutien (22) présente un canal annulaire (30) périphérique, ouvert et tourné vers le renflement annulaire (25).
